# EUROPÄISCHE PATENTSCHRIFT

(11) **EP 3 021 179 B1**
(45) Veröffentlichungstag und Bekanntmachung des Hinweises auf die Patenterteilung: **09.10.2019**
(21) Anmeldenummer: 15179964.0
(22) Anmeldetag: 06.08.2015
(51) Int. Cl.: G05B 19/042

(54) **VERFAHREN ZUM ANSCHLIESSEN EINES EMBEDDED-GERÄTS AN EINE STEUEREINHEIT**
METHOD FOR CONNECTING AN EMBEDDED DEVICE TO A CONTROL UNIT
PROCÉDÉ DE RACCORDEMENT D'UN APPAREIL INTÉGRÉ À UNE UNITÉ DE COMMANDE

(30) Priorität: 14.11.2014 DE 102014116722
(43) Veröffentlichungstag der Anmeldung: 18.05.2016
(73) Patentinhaber: Schneider Electric Automation GmbH, 97828 Marktheidenfeld (DE)
(72) Erfinder: Berner, Ralf, 88074 Meckenbeuren (DE)
(74) Vertreter: Manitz Finsterwald Patent- und Rechtsanwaltspartnerschaft mbB

(56) Entgegenhaltungen:
- EP-A2- 1 200 884
- WO-A1-2014/101736
- DE-A1- 10 208 530
- DE-A1-102009 028 195
- DE-A1-102009 046 806
- DE-A1-102013 103 242
- US-A1- 2003 061 311

## Beschreibung

Die vorliegende Erfindung betrifft ein Verfahren zum Anschließen eines Embedded-Geräts, bevorzugt eines Feldgeräts, an eine Steuereinheit einer industriellen Steuerung bzw. eines industriellen Steuerungssystems, insbesondere an eine speicherprogrammierbare Steuerung. Das Verfahren eignet sich zum dauerhaften Betreiben eines Embedded-Geräts mittels der Steuereinheit.

Zur Automatisierung von industriellen Abläufen werden verschiedene Embedded-Geräte eingesetzt, die z.B. Motoren, Pumpen und andere Aktoren steuern oder mit Sensoren verbunden sein können. Mehrere Embedded-Geräte, d.h. mehrere Devices, werden üblicherweise mit einer Steuereinheit, also z.B. einer speicherprogrammierbaren Steuerung (SPS) (auch als Programmable Logic Controller (PLC) bezeichnet) mittels einer Datenverbindung verbunden und von der Steuereinheit angesteuert.

Um die Funktionen der angeschlossenen Embedded-Geräte verwenden zu können, muss der Funktionsumfang der Embedded-Geräte der Steuereinheit bekannt sein. Herkömmlicherweise wird hierbei in einer separaten Entwicklungsumgebung zunächst die Applikation konfiguriert, parametriert und es wird ein Ablaufprogramm erstellt. Dieses wird kompiliert und an die Steuereinheit übertragen. Nach Aktivieren des Steuerprogramms steuert das Ablaufprogramm der Steuereinheit das Embedded-Gerät.

Aufgrund der Vielzahl der verfügbaren unterschiedlichen Embedded-Geräte wird nachteiliger Weise in der Entwicklungsumgebung viel Speicherplatz für die Bereitstellung sämtlicher Treiber beansprucht.

Das Anschließen eines Embedded-Geräts an eine Steuereinheit oder auch der Austausch eines bereits vorhandenen Geräts, z.B. gegen eine neuere Version, verursacht somit einen großen zeitlichen und logistischen Aufwand.

Aus der EP 1 200 884 B1 ist ein Verfahren gemäß dem Oberbegriff des Anspruchs 1 bekannt.

Die DE 102 08 530 A1 lehrt ein Verfahren zum Betrieb eines Peripheriegeräts, wobei es sich bei dem Peripheriegerät beispielsweise um ein über einen Feldbus an eine SPS angeschlossenes Feldgerät handeln kann. Gemäß der DE 102 08 530 A1 wird eine das Peripheriegerät beschreibende Gerätedatei der SPS von dem Peripheriegerät zur Verfügung gestellt.

Es ist die der Erfindung zugrundeliegende Aufgabe, ein Verfahren zum vereinfachten Anschließen eines Embedded-Geräts an eine Steuereinheit sowie zum vereinfachten Betrieb des Embedded-Geräts anzugeben.

Diese Aufgabe wird durch ein Verfahren gemäß Anspruch 1 und insbesondere dadurch gelöst, dass die Steuereinheit eine Programmierumgebung bereitstellt mittels welcher ein Ablaufprogramm der Steuereinheit erstellbar oder modifizierbar ist, wobei ein Zugriff auf die Programmierumgebung mittels eines Web-Servers der Steuereinheit erfolgt, wobei die Programmierumgebung die Eingabe von Quellcode gestattet und aus dem Quellcode von der Steuereinheit ausführbaren Code generiert, eine Datenverbindung, bevorzugt mittels eines Feldbusses, zwischen dem Embedded-Gerät und der Steuereinheit hergestellt wird und das Embedded-Gerät an die Steuereinheit alle notwendigen Funktionsdaten überträgt, um das Embedded-Gerät mittels der Steuereinheit zu betreiben, wobei die Funktionsdaten sämtliche für den weiterführenden Betrieb des Embedded-Geräts durch die Steuereinheit notwendigen Informationen enthalten und die Funktionsdaten funktionale Blöcke umfassen, die von dem Embedded-Gerät ausführbare Funktionen enthalten, wobei die funktionalen Blöcke in einem in den Funktionsdaten enthaltenen Quellcode übertragen werden.

Anders ausgedrückt werden nach dem Anschließen des Embedded-Geräts an die Steuereinheit sämtliche für das Embedded-Gerät spezifischen Daten an die Steuereinheit übertragen, die die Steuereinheit anschließend verwendet, um das Embedded-Gerät zu betreiben. Dies bedeutet, die Steuereinheit muss keine spezifischen Informationen über das Embedded-Gerät besitzen oder herunterladen, da nach der Übertragung der notwendigen Funktionsdaten von dem Embedded-Gerät sämtliche funktionsrelevanten Daten über das Embedded-Gerät in der Steuereinheit vorliegen. Die Steuereinheit muss also lediglich in der Lage sein, mit dem Embedded-Gerät zu kommunizieren, um die notwendigen Funktionsdaten zu empfangen. Eine Adaption der Steuereinheit oder deren Software an ein spezifisches Embedded-Gerät ist dafür nicht notwendig.

Das Embedded-Gerät übermittelt somit nicht nur eine Identifikation, sondern kann der Steuereinheit die auf dem Embedded-Gerät verfügbaren Funktionen bzw. Funktionsdaten mitteilen, die beispielsweise in Funktionsblöcke gegliedert sein können.

Aufgrund der Bereitstellung sämtlicher benötigter Funktionsdaten durch das Embedded-Gerät kann ein Abruf von Daten durch die Steuereinheit über eine Internetverbindung und ein manuelles Aufspielen der benötigten Funktionsdaten entfallen. Die Funktionsdaten können insbesondere ein Teil einer Firmware des Embedded-Geräts sein.

Ein Bediener kann auf die Programmierumgebung der Steuereinheit zugreifen und die Funktionalität der Programmierumgebung nutzen, um ein Ablaufprogramm für die Steuereinheit neu zu erstellen oder ein vorhandenes Ablaufprogramm zu verändern. Dieses Vorgehen stellt eine Abkehr von der üblichen Erstellung von Ablaufprogrammen auf einem separaten Computer wie z.B. einem PersonalComputer (PC) dar, der auch als Engineering Tool bezeichnet wird. Durch die Verlagerung der Programmierumgebung auf die Steuereinheit wird die Programmierumgebung unabhängig von eventuellen Änderungen des Betriebssystems des separaten Computers.

Zudem gestattet es die Programmierumgebung mittels der Steuereinheit den Betrieb des Embedded-Geräts über dessen gesamten Lebenszyklus hinweg allein mit den Bordmitteln der Steuereinheit und des Embedded-Geräts zu steuern. Insbesondere können benötigte Änderungen an Steuerungsabläufen, Updates und/oder Wartungen an dem Embedded-Gerät mittels der Programmierumgebung vorgenommen werden. Ein Nutzer kann sich beispielsweise mittels einer drahtlosen Datenverbindung (z.B. mit einem Smartphone, einem Notebook und dergleichem) und eines Browsers mit dem Web-Server und damit mit der Programmierumgebung verbinden und die Programmierung der Steuereinheit und/oder des Embedded-Geräts verändern. Zusätzliche Systeme, wie z.B. Engineering Tools, werden dann nicht mehr benötigt.

Bei der Programmierumgebung der Steuereinheit kann es sich um eine Engineering-Umgebung handeln, die neben einem Editieren, Compilieren, Linken, Locaten und/oder einem Code-Hot-Swap auch weitergehende Funktionalität zur Verfügung stellen kann. Beispielsweise kann die Möglichkeit bestehen, das Embedded-Gerät zu starten, zu stoppen und/oder einen Reset durchzuführen. Zudem kann die Programmierumgebung der Steuereinheit ausgebildet sein, das Embedded-Gerät zu konfigurieren und/oder zu flashen, d.h. einen Flashspeicher des Embedded-Geräts neu zu beschreiben. Die Engineering-Umgebung kann also eine Maintenance-Funktion über die gesamte Lebensdauer des Embedded-Geräts realisieren.

Es erfolgt also ein Zugriff auf die Programmierumgebung mittels eines Web-Servers der Steuereinheit, wobei die Programmierumgebung die Eingabe von Quellcode ermöglichen und aus dem Quellcode von der Steuereinheit ausführbaren Code generieren kann. Der Web-Server wird dabei von der Steuereinheit ausgeführt und stellt eine Web-Oberfläche für die Programmierumgebung bereit. Die Web-Oberfläche kann üblichen Programmierumgebungen nachempfunden sein, wobei lediglich der Unterschied besteht, dass die Programmierumgebung dann mit einem Browser aufgerufen wird.

Erfindungsgemäß wird der Zeit- und Logistikaufwand für die Anbindung neuer Embedded-Geräte an die Steuereinheit stark reduziert. Beispielsweise kann die Steuereinheit nach dem Anschließen eines Embedded-Geräts gemäß dem erfindungsgemäßen Verfahren das Embedded-Gerät innerhalb kurzer Zeit, z.B. innerhalb weniger Sekunden, beginnen zu betreiben.

Nach der Übertragung der Funktionsdaten schließt sich also der übliche Betrieb des Embedded-Geräts an, bei welchem die Steuereinheit mit dem Embedded-Gerät über die Datenverbindung kommuniziert. Die Datenverbindung kann beispielsweise ein Feldbus, z.B. ein CAN-Bus (Controller Area Network-Bus), eine SERCOS 3 Schnittstelle, ein EtherNet/IP-Bus, eine Ethernet-Verbindung oder dergleichen sein.

Die Steuereinheit und das Embedded-Gerät sind dabei üblicherweise räumlich getrennt und allein mittels der Datenverbindung verbunden.

Vorteilhafte Weiterbildungen der Erfindung sind der Beschreibung, den Unteransprüchen sowie den Zeichnungen zu entnehmen.

Gemäß einer ersten vorteilhaften Ausführungsform verwendet die Steuereinheit im Betrieb ausschließlich die empfangenen Funktionsdaten, um das Embedded-Gerät zu betreiben. Der Betrieb des Embedded-Geräts findet also allein auf der Grundlage der empfangenen Funktionsdaten statt. Unter dem Betrieb des Embedded-Geräts ist die Verwendung der Funktionen des Embedded-Geräts zu verstehen, also beispielsweise das Ein- und Ausschalten eines angeschlossenen Aktors. Nicht zum Betrieb gehört die Kommunikation der Steuereinheit mit dem Embedded-Gerät. Die Kommunikation muss auch ohne den Empfang der Funktionsdaten möglich sein, um die Funktionsdaten überhaupt empfangen zu können.

Gemäß einer weiteren vorteilhaften Ausführungsform überträgt das Embedded-Gerät die Funktionsdaten auf eine Aufforderung der Steuereinheit. Die Steuereinheit kann die Datenverbindung überwachen und nach neu angeschlossenen Embedded-Geräten suchen. Diese Suche kann beispielsweise mittels des SNMP-Protokolls (Simple Network Management Protocol) über eine Ethernet-Verbindung erfolgen. Die Steuereinheit kann den aufgefundenen Embedded-Geräten anschließend eine Verbindungsaufforderung senden, woraufhin die Embedded-Geräte die notwendigen Funktionsdaten an die Steuereinheit übertragen.

Alternativ kann auch das Embedded-Gerät die Datenverbindung überwachen und nach angeschlossenen Steuereinheiten scannen. Die notwendigen Funktionsdaten können dann auch ohne eine Aufforderung der Steuereinheit an die Steuereinheit übertragen werden.

Insbesondere werden die funktionalen Blöcke als von der Steuereinheit ausführbarer Code übertragen werden. Die funktionalen Blöcke können somit Anweisungen enthalten, die z.B. einen Aktor aktivieren/deaktivieren, Parameter des Embedded-Geräts einstellen oder von dem Embedded-Gerät aufgezeichnete Sensordaten abfragen. In den Funktionsdaten können also ein sogenannter "Device Function Pool" (DFP), ein "Electronic Data Sheet" (EDS) und/oder eine Treiber-Bibliothek enthalten sein.

Bevorzugt ist der in den Funktionsdaten enthaltene Quellcode nach dem IEC61131-3-Standard normiert. Ein auf diese Weise normierter Quellcode kann von dem Embedded-Gerät und/oder der Steuereinheit mit minimalem Aufwand in eine bestehende Software integriert und dann ausgeführt werden. Alternativ kann der Quellcode auch ein C / C++ / Java / Perl-Code sein und beispielsweise C Code Snippets enthalten. Ebenfalls können die Funktionsdaten direkt maschinenlesbaren Code enthalten. Ein solcher maschinenlesbarer Code kann von dem Embedded-Gerät ohne weitere Zwischenschritte ausgeführt werden.

Gemäß einer weiteren vorteilhaften Ausführungsform enthalten die Funktionsdaten eine Kategorie des Embedded-Geräts und/oder Parameter des Embedded-Geräts und/oder eine Anleitung des Embedded-Geräts. Die Kategorie kann angeben, ob das Embedded-Gerät Aktoren steuert oder beispielsweise Sensordaten erfasst. Die Parameter können bevorzugt in einem Parameter-/Object-Dictionary enthalten sein. Der Steuereinheit wird auf diese Weise mitgeteilt, nach welchen Parametern das Embedded-Gerät arbeitet. Die Parameter können beispielsweise ein P-Verstärkungsfaktor eines Reglers, Zeitkonstanten und dergleichen sein. Bevorzugt sind die Parameter veränderbar.

Durch das Vorsehen einer Anleitung des Embedded-Geräts in den Funktionsdaten kann ein Benutzer direkt auf die Anleitung zugreifen, wodurch die Einbindung des Embedded-Geräts zusätzlich erleichtert wird.

Gemäß einer weiteren vorteilhaften Ausführungsform enthalten die Funktionsdaten eine Konfiguration für eine Mensch-Maschine-Schnittstelle. Die Konfiguration kann an das jeweilige Embedded-Gerät angepasst sein, wodurch die Mensch-Maschine-Schnittstelle so ausgebildet werden kann, dass sämtliche Funktionen des Embedded-Geräts auf einfache Weise angesteuert werden können. Insbesondere kann die Mensch-Maschine-Schnittstelle Bestandteil der Steuereinheit sein. Alternativ kann die Mensch-Maschine-Schnittstelle (die auch als Human Machine Interface - HMI bezeichnet werden kann) ein weiteres an der Steuereinheit angeschlossenes Embedded-Gerät sein.

Beispielsweise kann beim Anschließen eines Embedded-Geräts die Konfiguration für eine in der Steuereinheit enthaltene Mensch-Maschine-Schnittstelle an die Steuereinheit übertragen werden, wobei die Konfiguration bevorzugt die Anordnung von Schaltflächen, Reglern usw. enthält. Die Mensch-Maschine-Schnittstelle kann nach dem Anschließen des Embedded-Geräts automatisch auf die empfangene Konfiguration umgeschaltet werden, wodurch ein Bediener sofort in die Lage versetzt wird, die Funktionen des neu angeschlossenen Embedded-Geräts mittels der Mensch-Maschine-Schnittstelle zu nutzen.

Gemäß einer weiteren vorteilhaften Ausführungsform wird eine Konfiguration der Steuereinheit aufgrund der Funktionsdaten angepasst. Dies bedeutet, dass Einstellungen der Steuereinheit insbesondere so verändert werden, dass die Steuereinheit das angeschlossene Embedded-Gerät ansteuern kann. Zu diesem Zweck kann beispielsweise Rechenzeit der Steuereinheit für das Embedded-Gerät reserviert werden.

Zudem kann eine Programmierumgebung auf der Steuereinheit installiert sein, die speziell an die Funktionalität der Steuereinheit angepasst ist. Die Programmierumgebung kann auf diese Weise vereinfacht werden, wodurch auch Speicherplatz eingespart wird. Dies ist möglich, da die Programmierumgebung nicht universell für z.B. sämtliche Steuereinheiten eines Unternehmens ausgelegt werden muss. Die Programmierumgebung muss dabei insbesondere nur auf die Prozessorarchitektur der Steuereinheit ausgelegt sein und muss nicht in der Lage sein, verschiedene Prozessorarchitekturen zu bedienen. Außerdem kann die Programmierumgebung nur die Programmierung von Funktionen gestatten, die von der Steuereinheit auch ausgeführt werden können.

Die Programmierumgebung der Steuereinheit kann sämtliche Funktionen einer üblichen Programmierumgebung enthalten und z.B. aus Quellcode durch Kompilieren, Linken und Locaten ausführbaren Code erzeugen. Auch kann die Programmierumgebung der Steuereinheit die Fähigkeit zum Debuggen des erzeugten ausführbaren Codes besitzen, wobei insbesondere Unterbrechungspunkte (Breakpoints) gesetzt und aktuelle Registerstände ausgelesen werden können. Zudem kann die Programmierumgebung der Steuereinheit die Möglichkeit bieten, einen Code-Hot-Swap und/oder einen Online-Change durchzuführen.

Durch das Vorsehen der Programmierumgebung in der Steuereinheit kann zudem das sogenannte "Hot Code Swapping", das auch als "Online Change" bezeichnet wird, vereinfacht werden. Aufgrund des möglichen direkten Zugriffs der Programmierumgebung auf den auf der Steuereinheit vorhandenen ausführbaren Code können die notwendigen Pointer-Änderungen auf einfache Weise zur Laufzeit vorgenommen werden.

Der Web-Server kann insbesondere HTML5-basierte Web-Technologien verwenden, um die Programmierumgebung bereitzustellen. Die Programmierumgebung unterscheidet dabei zwischen der sogenannten Build-Time, bei welcher ein binärer Datenstrom (Maschinencode) aus dem Quellcode erzeugt wird, und der Run-Time, bei welcher der binäre Datenstrom von der Steuereinheit ausgeführt wird.

Durch die Verwendung eines Browsers kann die Programmierumgebung der Steuereinheit unabhängig von dem Betriebssystem, auf welchem der Browser basiert, verwendet werden. Somit ist ein plattformunabhängiger Zugriff auf die Programmierumgebung, beispielsweise mittels eines PCs, eines Tablet-Computers oder eines Smartphones möglich.

Die Implementierung der Programmierumgebung in der Steuereinheit besitzt zudem den Vorteil, dass nach Auslieferung der Steuereinheit kein zeitaufwändiger Installationsvorgang der Programmierumgebung auf einem Computer wie z.B. einem PC erfolgen muss. Stattdessen muss lediglich die Steuereinheit in Betrieb genommen werden, wobei nach der Inbetriebnahme sofort mittels des Webservers auf die Programmierumgebung zugegriffen werden kann. Der Zeitaufwand für den Nutzer der Steuereinheit, der zur Erstellung eines Anwenderprogramms notwendig ist, wird somit stark reduziert.

Gemäß einer weiteren vorteilhaften Ausführungsform sind in der Programmierumgebung die Funktionsdaten verfügbar. Dies bedeutet, die Funktionsdaten des Embedded-Geräts können in der Programmierumgebung beispielsweise als Funktionsblöcke vorliegen, die in den Quellcode einfügbar sind. Dabei können nur die von den angeschlossenen Embedded-Geräten zur Verfügung gestellten Funktionen in der Programmierumgebung direkt aufgerufen und verwendet werden. Die Erstellung des Quellcodes wird damit insofern vereinfacht, als ein Bediener nicht aus einer Vielzahl von theoretisch verfügbaren Funktionen diejenigen aussuchen muss, die tatsächlich von dem Embedded-Gerät unterstützt werden.

Zudem können in den Funktionsdaten auch High-Level-Funktionen oder Funktionsblöcke enthalten sein, die insbesondere von dem Hersteller des Embedded-Geräts vorgegeben und in dem Embedded-Gerät als Funktionsdaten gespeichert sind. Auf diese Weise stehen in der Programmierumgebung direkt nach dem Anschließen des Embedded-Geräts diese Funktionsblöcke zur Verfügung. Mittels der Funktionsblöcke können beispielsweise komplexe Bewegungsmuster eines Roboters oder Auswertungen von Sensordaten von dem jeweiligen Embedded-Gerät durchgeführt werden. Die Funktionen und Funktionsblöcke können im Quellcode beispielsweise mittels eines Funktionsaufrufs mit mehreren Eingangs- und Ausgangsvariablen aufgerufen werden.

Gemäß einer weiteren vorteilhaften Ausführungsform stellt das Embedded-Gerät einen Web-Server bereit, mittels welchem eine Konfiguration des Embedded-Geräts anzeigbar und/oder veränderbar ist. Die Steuereinheit kann für den Zugriff auf den Web-Server des Embedded-Geräts Anfragen an diesen tunneln. Mittels des Web-Servers des Embedded-Geräts können somit neue Funktionsdaten, das heißt zum Beispiel neue Funktionsblöcke, auf das Embedded-Gerät hochgeladen werden. Die neuen Funktionsdaten können dann automatisiert von dem Embedded-Gerät an die Steuereinheit übertragen werden.

Zudem kann auch die Steuereinheit auf den Web-Server des Embedded-Geräts zugreifen, um beispielsweise die notwendigen Funktionsdaten mittels des Web-Servers von dem Embedded-Gerät abzurufen.

Gemäß einer weiteren vorteilhaften Ausführungsform können sich die Steuereinheit und/oder das Embedded-Gerät auch periodisch mit einem Server verbinden, um beispielsweise Updates der Funktionsdaten oder für die Programmierumgebung herunterzuladen. Die Verbindung kann beispielsweise mittels einer Internetverbindung zu einem Cloud-Server erfolgen. Ein Hersteller der Steuereinheit und der Embedded-Geräte kann somit auf dem Cloud-Server jeweils die aktuelle Version der Funktionsdaten und der Programmierumgebung hinterlegen. Damit ist sichergestellt, dass auch bereits ausgelieferte Steuereinheiten und Embedded-Geräte aktuelle Software verwenden.

Die Erfindung betrifft auch ein Embedded-Gerät, insbesondere ein Feldgerät, mit einer Datenschnittstelle, bevorzugt für einen Feldbus, und einer Speichereinrichtung. Das Embedded-Gerät ist ausgebildet, eine Datenverbindung mittels der Datenschnittstelle zwischen dem Embedded-Gerät und einer Steuereinheit herzustellen und an die Steuereinheit Funktionsdaten zu übertragen, welche in der Speichereinrichtung gespeichert sind, wobei die Funktionsdaten sämtliche für den weiterführenden Betrieb des Embedded-Geräts durch die Steuereinheit notwendigen Informationen enthalten. Zudem umfassen die Funktionsdaten funktionale Blöcke, die von dem Embedded-Gerät ausführbare Funktionen enthalten, wobei die funktionalen Blöcke in einem in den Funktionsdaten enthaltenen Quellcode übertragen werden.

Bevorzugt umfasst das Embedded-Gerät eine Recheneinrichtung, welche ausgebildet ist, einen Web-Server bereitzustellen, wobei der Web-Server über die Datenschnittstelle erreichbar ist und mittels welchem eine Konfiguration des Geräts anzeigbar und/oder veränderbar ist.

Für das erfindungsgemäße Embedded-Gerät gelten die unter Bezugnahme auf das erfindungsgemäße Verfahren getroffenen Aussagen entsprechend.

Weiter offenbart ist eine Steuereinheit, insbesondere eine speicherprogrammierbare Steuerung, mit einer Datenschnittstelle, bevorzugt für einen Feldbus, und einer Speichereinrichtung. Die Steuereinheit zeichnet sich dadurch aus, dass sie ausgebildet ist, mittels der Datenschnittstelle Funktionsdaten von einem Embedded-Gerät zu empfangen, wobei die Funktionsdaten funktionale Blöcke umfassen, die von dem Embedded-Gerät ausführbare Funktionen enthalten, wobei die funktionalen Blöcke in einem in den Funktionsdaten enthaltenen Quellcode übertragen werden, und in der Speichereinrichtung zu speichern, eine über einen Web-Server erreichbare Programmierumgebung bereitzustellen, wobei die Funktionsdaten in der Programmierumgebung verfügbar sind, die Eingabe von Quellcode in der Programmierumgebung zu gestatten und aus dem Quellcode ausführbaren Code zu generieren, welcher in der Speichereinrichtung gespeichert wird und von der Steuereinheit ausgeführt wird.

Außerdem offenbart ist ein Automatisierungssystem umfassend ein Embedded-Gerät und eine Steuereinheit der voranstehend erläuterten Art.

Die Ausführungen zu dem erfindungsgemäßen Verfahren und zu dem erfindungsgemäßen Embedded-Gerät gelten entsprechend für die Steuereinheit und das Automatisierungssystem.

Nachfolgend wird die Erfindung rein beispielhaft unter Bezugnahme auf die Zeichnungen beschrieben. Es zeigen:
- Fig. 1: eine schematische Anordnung einer Steuereinheit und mehrerer Embedded-Geräte; und
- Fig. 2: schematisch einen Ablauf beim Anschließen eines Embedded-Geräts.

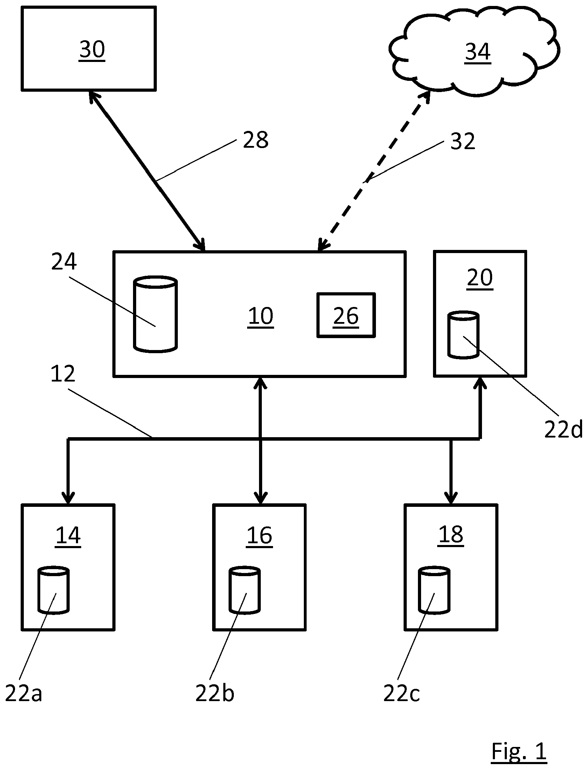

Fig. 1 zeigt schematisch eine als speicherprogrammierbare Steuerung (SPS) 10 ausgebildete industrielle Steuereinheit. Die SPS 10 wird mit einer Gleichspannung von 24 Volt betrieben und umfasst einen Anschluss für einen Automatisierungsbus, beispielsweise einen EtherNet/IP-Bus 12. Die SPS 10 dient der Steuerung einer (nicht gezeigten) Sortieranlage. Zu diesem Zweck ist die SPS 10 mittels des EtherNet/IP-Busses 12 mit Embedded-Geräten gekoppelt, wobei eine erste Motorsteuerung 14 ein Förderband der Sortieranlage steuert. Eine zweite Motorsteuerung 16 steuert das Entfernen von Gegenständen von dem Förderband durch das Bewegen von Weichen. Die Gegenstände auf dem Förderband werden mittels einer Sensorik 18, beispielsweise durch Lichtschranken, erkannt.

Weiterhin ist über den EtherNet/IP-Bus 12 eine Bedienerschnittstelle 20 mit einem berührungsempfindlichen Bildschirm mit der SPS 10 verbunden. Die Bedienerschnittstelle 20 ist benachbart zu der SPS 10 angeordnet und für Wartungspersonal zugänglich. Die SPS 10 bildet zusammen mit dem EtherNet/IP-Bus 12 und den Embedded-Geräten 14, 16, 18, 20 ein Automatisierungssystem.

Die mittels des EtherNet/IP-Busses 12 mit der SPS 10 verbundenen Embedded-Geräte 14, 16, 18, 20 umfassen jeweils eine Speichereinrichtung mit Funktionsdaten 22a, 22b, 22c, 22d. Die Funktionsdaten 22a, 22b, 22c, 22d enthalten alle von der SPS 10 benötigten Informationen, um das jeweilige Embedded-Gerät 14, 16, 18, 20 betreiben zu können. Die Funktionsdaten 22a, 22b, 22c, 22d liegen dabei in Form von Quellcode, Manuals, Device Descriptions, Bibliotheken, HMI-Templates, etc. und aus dem Quellcode erzeugten ausführbaren Code vor. Der Quellcode und der ausführbare Code sind also in den Funktionsdaten 22a, 22b, 22c, 22d enthalten.

Die Funktionsdaten 22a, 22b, 22c, 22d unterscheiden sich jeweils für die erste Motorsteuerung 14, die zweite Motorsteuerung 16, die Sensorik 18 und die Bedienerschnittstelle 20.

Beim Anschließen eines der Embedded-Geräte 14, 16, 18, 20 an den EtherNet/IP-Bus 12 (und damit an die SPS 10) erkennt die SPS 10 das neu angeschlossene Embedded-Gerät 14, 16, 18, 20 und fordert die Funktionsdaten 22a, 22b, 22c, 22d des jeweiligen Embedded-Geräts 14, 16, 18, 20 an. Die Funktionsdaten 22a, 22b, 22c, 22d werden dann über den EtherNet/IP-Bus 12 an die SPS 10 übermittelt und von der SPS 10 in einer Datenbank 24 gespeichert. Dieser Vorgang wird für die erste Motorsteuerung 14, die zweite Motorsteuerung 16, die Sensorik 18 und die Bedienerschnittstelle 20 ausgeführt.

Die SPS 10 umfasst einen (nicht gezeigten) Web-Server, der eine Programmierumgebung 26 bereitstellt. In der Programmierumgebung 26 sind die in der Datenbank 24 enthaltenen Funktionen der angeschlossenen Embedded-Geräte 14, 16, 18, 20 als Funktionsblöcke verfügbar und können bei der Verwendung der Programmierumgebung 26 in einen Quellcode integriert werden.

Der Zugriff auf die Programmierumgebung 26 erfolgt beispielsweise über eine drahtlose Ethernet-Verbindung 28 mittels eines Web-Browsers eines Tablet-Computers 30.

Mit dem Tablet-Computer 30 können somit die Arbeitsschritte der ersten Motorsteuerung 14, der zweiten Motorsteuerung 16 und der Sensorik 18 festgelegt werden. Die Programmierung der Arbeitsschritte erfolgt dabei ausschließlich mit dem in den Funktionsdaten 22a, 22b, 22c enthaltenen Quellcode. Zudem kann wie eingangs beschrieben unter Zuhilfenahme der von der Bedienerschnittstelle 20 an die SPS 10 übermittelten Funktionsdaten 22d eine Bedieneroberfläche an der Bedienerschnittstelle 20 erstellt werden.

Nach Fertigstellung des Quellcodes auf der SPS 10 erstellt die Programmierumgebung 26 aus dem Quellcode ausführbaren Code und die SPS 10 beginnt den ausführbaren Code abzuarbeiten. Im Zuge der Abarbeitung, d.h. der Ausführung des Codes, kommuniziert die SPS 10 über den EtherNet/IP-Bus 12 mit den Embedded-Geräten 14, 16, 18, 20 und weist diese an, jeweils bestimmte Aktionen durchzuführen, um die Sortieranlage zu betreiben.

Temporär kann die SPS 10 eine Internetverbindung 32 mit einem Cloud-Server 34 herstellen. Den Embedded-Geräten 14, 16, 18, 20 ist es dann möglich, über den EtherNet/IP-Bus 12 und die Internetverbindung 32 ihre jeweiligen Funktionsdaten 22a, 22b, 22c, 22d zu aktualisieren. Die aktualisierten Funktionsdaten 22a, 22b, 22c, 22d werden anschließend an die SPS 10 übertragen und dort wiederum in der Datenbank 24 gespeichert.

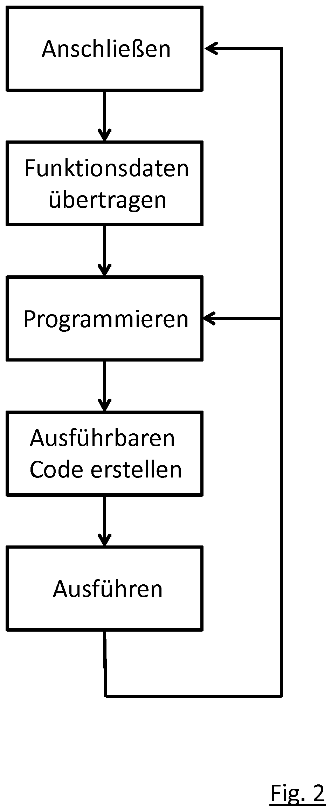

Die Verfahrensschritte beim Anschließen eines Embedded-Geräts, wie beispielsweise der ersten Motorsteuerung 14 sind schematisch in Fig. 2 gezeigt. Nach dem Anschließen erfolgt die Übertragung der Funktionsdaten 22a, 22b, 22c, 22d an die SPS 10, woraufhin die Programmierung mittels der Programmierumgebung 26 ermöglicht wird. Nach der Programmierung erfolgt die Erstellung des ausführbaren Codes und dessen Ausführung. Die Ausführung kann durch Änderungen der Programmierung und/oder durch das Anschließen anderer oder weiterer Embedded-Geräte verändert werden.

Die Funktionsweise des in Fig. 1 gezeigten Automatisierungssystems kann somit durch das Verfahren von Fig. 2 im Betrieb verändert werden. Dazu wird mittels des Tablet-Computers 30 auf die Programmierumgebung der SPS 10 zugegriffen und der Quellcode verändert.

Nach der Veränderung des Quellcodes wird im laufenden Betrieb neuer ausführbarer Code erstellt und die Ausführung auf den neu erzeugten ausführbaren Code umgeschaltet.

### Bezugszeichenliste

- 10: SPS
- 12: EtherNet/IP-Bus
- 14: erste Motorsteuerung
- 16: zweite Motorsteuerung
- 18: Sensorik
- 20: Bedienerschnittstelle
- 22a: Funktionsdaten
- 22b: Funktionsdaten
- 22c: Funktionsdaten
- 22d: Funktionsdaten
- 24: Datenbank
- 26: Programmierumgebung
- 28: drahtlose Ethernet-Verbindung
- 30: Tablet-Computer
- 32: Internetverbindung
- 34: Cloud-Server

## Patentansprüche

1. Verfahren zum Anschließen eines Embedded-Geräts (14, 16, 18, 20), bevorzugt eines Feldgeräts, an eine Steuereinheit (10) einer industriellen Steuerung, insbesondere eine speicherprogrammierbare Steuerung, bei welchem
die Steuereinheit (10) eine Programmierumgebung (26) bereitstellt, mittels welcher ein Ablaufprogramm der Steuereinheit (10) erstellbar oder modifizierbar ist, wobei ein Zugriff auf die Programmierumgebung (26) mittels eines Web-Servers der Steuereinheit (10) erfolgt, wobei die Programmierumgebung (26) die Eingabe von Quellcode gestattet und aus dem Quellcode von der Steuereinheit (10) ausführbaren Code generiert und
eine Datenverbindung (12), bevorzugt mittels eines Feldbusses, zwischen dem Embedded-Gerät (14, 16, 18, 20) und der Steuereinheit (10) hergestellt wird,
**dadurch gekennzeichnet, dass**
das Embedded-Gerät (14, 16, 18, 20) an die Steuereinheit (10) alle notwendigen Funktionsdaten (22a, 22b, 22c, 22d) überträgt, um das Embedded-Gerät (14, 16, 18, 20) mittels der Steuereinheit (10) zu betreiben, wobei die Funktionsdaten (22a, 22b, 22c, 22d) sämtliche für den weiterführenden Betrieb des Embedded-Geräts (14, 16, 18, 20) durch die Steuereinheit (10) notwendigen Informationen enthalten und die Funktionsdaten (22a, 22b, 22c, 22d) funktionale Blöcke umfassen, die von dem Embedded-Gerät (14, 16, 18, 20) ausführbare Funktionen enthalten, wobei die funktionalen Blöcke in einem in den Funktionsdaten (22a, 22b, 22c, 22d) enthaltenen Quellcode übertragen werden.

2. Verfahren nach Anspruch 1,
**dadurch gekennzeichnet, dass** die Steuereinheit (10) ausschließlich die empfangenen Funktionsdaten (22a, 22b, 22c, 22d) verwendet, um das Embedded-Gerät (14, 16, 18, 20) zu betreiben.

3. Verfahren nach Anspruch 1 oder 2,
**dadurch gekennzeichnet, dass** das Embedded-Gerät (14, 16, 18, 20) die Funktionsdaten (22a, 22b, 22c, 22d) auf eine Aufforderung der Steuereinheit (10) hin überträgt.

4. Verfahren nach zumindest einem der vorstehenden Ansprüche,
**dadurch gekennzeichnet, dass** die funktionalen Blöcke der Funktionsdaten (22a, 22b, 22c, 22d) auch als von der Steuereinheit (10) ausführbarer Code übertragen werden.

5. Verfahren nach zumindest einem der vorstehenden Ansprüche,
**dadurch gekennzeichnet, dass** der in den Funktionsdaten (22a, 22b, 22c, 22d) enthaltene Quellcode nach dem IEC61131-3-Standard normiert ist.

6. Verfahren nach zumindest einem der vorstehenden Ansprüche,
**dadurch gekennzeichnet, dass** die Funktionsdaten (22a, 22b, 22c, 22d) eine Kategorie des Embedded-Geräts (14, 16, 18, 20) und/oder Parameter des Embedded-Geräts (14, 16, 18, 20) und/oder eine Anleitung des Embedded-Geräts (14, 16, 18, 20) enthalten.

7. Verfahren nach zumindest einem der vorstehenden Ansprüche,
**dadurch gekennzeichnet, dass** eine Konfiguration der Steuereinheit (10) aufgrund der Funktionsdaten (22a, 22b, 22c, 22d) angepasst wird.

8. Verfahren nach zumindest einem der vorstehenden Ansprüche,
**dadurch gekennzeichnet, dass** die Programmierumgebung (26) aus dem Quellcode durch Kompilieren, Linken und/oder Locaten ausführbaren Code erzeugt.

9. Verfahren nach Anspruch 8,
**dadurch gekennzeichnet, dass** die Programmierumgebung (26) die Fähigkeit zum Debuggen des erzeugten ausführbaren Codes besitzt, wobei insbesondere Unterbrechungspunkte (Breakpoints) gesetzt und aktuelle Registerstände ausgelesen werden.

10. Verfahren nach zumindest einem der vorstehenden Ansprüche,
**dadurch gekennzeichnet, dass** in der Programmierumgebung die Funktionsdaten (22a, 22b, 22c, 22d) verfügbar sind.

11. Verfahren nach zumindest einem der vorstehenden Ansprüche,
**dadurch gekennzeichnet, dass** nur die von dem angeschlossenen Embedded-Gerät (14, 16, 18, 20) zur Verfügung gestellten Funktionen in der Programmierumgebung (26) direkt aufgerufen und verwendet werden.

12. Embedded-Gerät (14, 16, 18, 20), insbesondere Feldgerät, mit
a) einer Datenschnittstelle, bevorzugt für einen Feldbus (12), und
b) einer Speichereinrichtung,
wobei
das Embedded-Gerät (14, 16, 18, 20) ausgebildet ist,
a) eine Datenverbindung mittels der Datenschnittstelle zwischen dem Embedded-Gerät (14, 16, 18, 20) und einer Steuereinheit (10) herzustellen,
**dadurch gekennzeichnet, dass**
das Embedded-Gerät (14, 16, 18, 20) ausgebildet ist,
b) an die Steuereinheit (10) Funktionsdaten (22a, 22b, 22c, 22d) zu übertragen, welche in der Speichereinrichtung gespeichert sind, wobei die Funktionsdaten (22a, 22b, 22c, 22d) sämtliche für den weiterführenden Betrieb des Embedded-Geräts (14, 16, 18, 20) durch die Steuereinheit (10) notwendigen Informationen enthalten und die Funktionsdaten (22a, 22b, 22c, 22d) funktionale Blöcke umfassen, die von dem Embedded-Gerät (14, 16, 18, 20) ausführbare Funktionen enthalten, wobei die funktionalen Blöcke in einem in den Funktionsdaten (22a, 22b, 22c, 22d) enthaltenen Quellcode übertragen werden.

13. Embedded-Gerät (14, 16, 18, 20) nach Anspruch 12,
**gekennzeichnet durch**
eine Recheneinrichtung, welche ausgebildet ist, einen Web-Server bereitzustellen, wobei der Web-Server über die Datenschnittstelle erreichbar ist und mittels welchem eine Konfiguration des Embedded-Geräts (14, 16, 18, 20) anzeigbar und/oder veränderbar ist.

## Claims

1. A method of connecting an embedded device (14, 16, 18, 20), preferably a field device, to a control unit (10) of an industrial control, in particular to a programmable logic controller, in which
the control unit (10) provides a programming environment (26) by means of which a sequence program of the control unit (10) can be created or modified, wherein access to the programming environment (26) takes place by means of a web server of the control unit (10), wherein the programming environment (26) permits the input of source code and generates code which can be executed by the control unit (10) from the source code, and
wherein a data connection (12) is established, preferably by means of a field bus, between the embedded device (14, 16, 18, 20) and the control unit (10),
**characterized in that**
the embedded device (14, 16, 18, 20) transmits all the necessary functional data (22a, 22b, 22c, 22d) to the control unit (10) to operate the embedded device (14, 16, 18, 20) by means of the control unit (10), with the functional data (22a, 22b, 22c, 22d) including all the information necessary for the continued operation of the embedded device (14, 16, 18, 20) by the control unit (10) and the functional data (22a, 22b, 22c, 22d) comprising functional blocks which include functions which can be executed by the embedded device (14, 16, 18, 20), with the functional blocks being transmitted in a source code included in the functional data (22a, 22b, 22c, 22d).

2. A method in accordance with claim 1,
**characterized in that**
the control unit (10) only uses the received functional data (22a, 22b, 22c, 22d) to operate the embedded device (14, 16, 18, 20).

3. A method in accordance with claim 1 or claim 2,
**characterized in that**
the embedded device (14, 16, 18, 20) transmits the functional data (22a, 22b, 22c, 22d) in response to a request of the control unit (10).

4. A method in accordance with at least one of the preceding claims,
**characterized in that**
the functional blocks of the functional data (22a, 22b, 22c, 22d) are also transmitted as code which can be executed by the control unit (10).

5. A method in accordance with at least one of the preceding claims,
**characterized in that**
the source code included in the functional data (22a, 22b, 22c, 22d) is standardized in accordance with the IEC61131-3 standard.

6. A method in accordance with at least one of the preceding claims,
**characterized in that**
the functional data (22a, 22b, 22c, 22d) include a category of the embedded device (14, 16, 18, 20) and/or parameters of the embedded device (14, 16, 18, 20) and/or an instruction of the embedded device (14, 16, 18, 20).

7. A method in accordance with at least one of the preceding claims,
**characterized in that**
a configuration of the control unit (10) is adapted on the basis of the functional data (22a, 22b, 22c, 22d).

8. A method in accordance with at least one of the preceding claims,
**characterized in that**
the programming environment (26) generates executable code from the source code by compiling, linking and/or locating.

9. A method in accordance with claim 8,
**characterized in that**
the programming environment (26) has the capability to debug the generated executable code, with breakpoints in particular being set and current register statuses being read out.

10. A method in accordance with at least one of the preceding claims,
**characterized in that**
the functional data (22a, 22b, 22c, 22d) are available in the programming environment.

11. A method in accordance with at least one of the preceding claims,
**characterized in that**
only the functions provided by the connected embedded device (14, 16, 18, 20) are directly called up and used in the programming environment (26).

12. An embedded device (14, 16, 18, 20), in particular a field device, comprising
a) a data interface, preferably for a fieldbus (12), and
b) a memory device,
wherein
the embedded device (14, 16, 18, 20) is configured
a) to establish a data connection by means of the data interface between the embedded device (14, 16, 18, 20) and a control unit (10),
**characterized in that**
the embedded device (14, 16, 18, 20) is configured
b) to transmit functional data (22a, 22b, 22c, 22d) which are stored in the memory device to the control unit (10), with the functional data (22a, 22b, 22c, 22d) including all the information necessary for the continued operation of the embedded device (14, 16, 18, 20) by the control unit (10) and the functional data (22a, 22b, 22c, 22d) comprising functional blocks which include functions which can be executed by the embedded device (14, 16, 18, 20), with the functional blocks being transmitted in a source code included in the functional data (22a, 22b, 22c, 22d).

13. An embedded device (14, 16, 18, 20) in accordance with claim 12,
**characterized by**
a processing device which is configured to provide a web server, wherein the web server is accessible via the data interface and a configuration of the embedded device (14, 16, 18, 20) can be displayed and/or changed by means of said web server.

## Revendications

1. Procédé de connexion d'un dispositif embarqué (14, 16, 18, 20), de préférence un dispositif de terrain, à une unité de commande (10) d'une commande industrielle, en particulier d'un automate programmable industriel, dans lequel
l'unité de commande (10) met à disposition un environnement de programmation (26) au moyen duquel un programme séquentiel de l'unité de commande (10) peut être créé ou modifié, l'accès à l'environnement de programmation (26) s'effectuant au moyen d'un serveur web de l'unité de commande (10), l'environnement de programmation (26) permettant l'entrée d'un code source et générant à partir du code source un code exécutable par l'unité de commande (10), et
une connexion de données (12) est établie, de préférence au moyen d'un bus de terrain, entre le dispositif embarqué (14, 16, 18, 20) et l'unité de commande (10),
**caractérisé en ce que**
le dispositif embarqué (14, 16, 18, 20) transmet à l'unité de commande (10) toutes les données fonctionnelles nécessaires (22a, 22b, 22c, 22d) pour l'exploitation du dispositif embarqué (14, 16, 18, 20) au moyen de l'unité de commande (10), les données fonctionnelles (22a, 22b, 22c, 22d) contenant toutes les informations nécessaires à la poursuite de l'exploitation du dispositif embarqué (14, 16, 18, 20) par l'unité de commande (10) et les données fonctionnelles (22a, 22b, 22c, 22d) comprenant des blocs fonctionnels qui contiennent des fonctions exécutables par le dispositif embarqué (14, 16, 18, 20), les blocs fonctionnels étant transmis dans un code source contenu dans les données fonctionnelles (22a, 22b, 22c, 22d).

2. Procédé selon la revendication 1,
**caractérisé en ce que**
l'unité de commande (10) utilise exclusivement les données fonctionnelles reçues (22a, 22b, 22c, 22d) pour exploiter le dispositif embarqué (14, 16, 18, 20).

3. Procédé selon la revendication 1 ou 2,
**caractérisé en ce que**
le dispositif embarqué (14, 16, 18, 20) transmet les données fonctionnelles (22a, 22b, 22c, 22d) sur une demande de l'unité de commande (10).

4. Procédé selon au moins l'une des revendications précédentes,
**caractérisé en ce que**
les blocs fonctionnels des données fonctionnelles (22a, 22b, 22c, 22d) sont également transmis sous forme de code exécutable par l'unité de commande (10).

5. Procédé selon au moins l'une des revendications précédentes,
**caractérisé en ce que**
le code source contenu dans les données fonctionnelles (22a, 22b, 22c, 22d) est normalisé selon la norme IEC61131-3.

6. Procédé selon au moins l'une des revendications précédentes,
**caractérisé en ce que**
les données fonctionnelles (22a, 22b, 22c, 22d) contiennent une catégorie du dispositif embarqué (14, 16, 18, 20) et/ou des paramètres du dispositif embarqué (14, 16, 18, 20) et/ou une notice du dispositif embarqué (14, 16, 18, 20).

7. Procédé selon au moins l'une des revendications précédentes,
**caractérisé en ce**
**qu'**une configuration de l'unité de commande (10) est adaptée sur la base des données fonctionnelles (22a, 22b, 22c, 22d).

8. Procédé selon au moins l'une des revendications précédentes,
**caractérisé en ce que**
l'environnement de programmation (26) génère un code exécutable à partir du code source par compilation, édition de liens et/ou localisation.

9. Procédé selon la revendication 8,
**caractérisé en ce que**
l'environnement de programmation (26) a la capacité de déboguer le code exécutable généré, en particulier des points d'arrêt (breakpoints) étant définis et des états de registre actuels étant lus.

10. Procédé selon au moins l'une des revendications précédentes,
**caractérisé en ce que**
les données fonctionnelles (22a, 22b, 22c, 22d) sont disponibles dans l'environnement de programmation.

11. Procédé selon au moins l'une des revendications précédentes,
**caractérisé en ce que**
seules les fonctions mises à disposition par le dispositif embarqué connecté (14, 16, 18, 20) sont directement appelées et utilisées dans l'environnement de programmation (26).

12. Dispositif embarqué (14, 16, 18, 20), en particulier dispositif de terrain, comprenant
a) une interface de données, de préférence pour un bus de terrain (12), et
b) un moyen de stockage,
le dispositif embarqué (14, 16, 18, 20) étant conçu pour
a) établir une connexion de données au moyen de l'interface de données entre le dispositif embarqué (14, 16, 18, 20) et une unité de commande (10),
**caractérisé en ce que**
le dispositif embarqué (14, 16, 18, 20) est conçu pour
b) transmettre à l'unité de commande (10) des données fonctionnelles (22a, 22b, 22c, 22d) qui sont stockées dans le moyen de stockage, les données fonctionnelles (22a, 22b, 22c, 22d) comprenant toutes les informations nécessaires à la poursuite de l'exploitation du dispositif embarqué (14, 16, 18, 20) par l'unité de commande (10) et les données fonctionnelles (22a, 22b, 22c, 22d) comprenant des blocs fonctionnels qui contiennent des fonctions exécutables par le dispositif embarqué (14, 16, 18, 20), les blocs fonctionnels étant transmis dans un code source contenu dans les données fonctionnelles (22a, 22b, 22c, 22d).

13. Dispositif embarqué (14, 16, 18, 20) selon la revendication 12,
**caractérisé par**
un moyen de calcul qui est conçu pour mettre à disposition un serveur web, le serveur web étant accessible via l'interface de données et au moyen duquel une configuration du dispositif embarqué (14, 16, 18, 20) peut être affichée et/ou modifiée.
